Europäisches Patentamt

European Patent Office

Office européen des brevets

(11) Publication number: **0 113 948**
**B1**

# (12) EUROPEAN PATENT SPECIFICATION

(45) Date of publication of patent specification: **29.10.86**

(51) Int. Cl.⁴: **F 16 L 25/02**

(21) Application number: **83304323.5**

(22) Date of filing: **26.07.83**

(54) **Pipe coupling.**

(30) Priority: **12.01.83 GB 8300730**

(43) Date of publication of application:
**25.07.84 Bulletin 84/30**

(45) Publication of the grant of the patent:
**29.10.86 Bulletin 86/44**

(84) Designated Contracting States:
**AT BE CH DE FR IT LI LU NL SE**

(56) References cited:
**GB-A- 838 464**
**GB-A- 977 133**
**US-A-2 859 052**
**US-A-3 862 771**

(73) Proprietor: **POWELL DUFFRYN TERMINALS LIMITED**
**Powell Duffryn House 127-147 Fleet Road**
**Fleet Hants GU13 8PD (GB)**

(72) Inventor: **Wilson, Keith Anthony**
**23 Seymour Road**
**Hadleigh Benfleet Essex SS7 2HB (GB)**

(74) Representative: **Ayers, Martyn Lewis Stanley et al**
**J.A. KEMP & CO. 14 South Square Gray's Inn London, WC1R 5EU (GB)**

Courier Press, Leamington Spa, England.

## Description

The present invention relates to a pipe coupling and more particularly to a insulating pipe coupling for interconnecting ship to shore, and similar, pipework.

A voltage difference always exists between a ship and the adjacent shore, e.g. the jetty to which it is moored. This voltage difference is produced by:—

(a) the cathodic protection system of the ship, shore structure or both;

(b) galvanic action;

(c) stray currents in ship on shore structure or both.

The voltage differences have been found to be sufficient to cause incencive arcing between metal components connecting ship and shore. In order to prevent such ignition sources occurring, particularly where on- or off-loading inflammable products, it was hitherto considered safe practice deliberately to connect ship to shore by an electrically conducting bonding wire.

However, experience has shown that the currents flowing through the bonding wire may be sufficient to cause unacceptable heating. It has not been possible to specify the size of bonding wire which would always be adequate for the currents flowing. For this reason, it was decided that ship and shore should remain electrically separate and various port authorities are bringing into force regulations requiring that measures are taken to keep the ship and shore structure electrically separate. The International Safety Guide for Oil Tankers and Terminals calls for an insulating flange to be inserted in the ship to shore product lines. The insulation need not have a very high resistance (a few ohms is probably sufficient) but its integrity must be good; the term "electrically insulating material" as used herein is thus used in the broad sense rather than the more usual, narrow one.

Because of the hard use to which such an insulating flange or pipe coupling may be put, it is preferable that its insulating properties derive from the material from which it is made, rather than from any insulating coating. One proposed construction of an insulating coupling consisted of a cylindrical body of insulating material having radially outwardly directed annular flanges at each end, the two flanges having through holes for bolting the flanges to mating flanges on the ship and shore pipework. A third radially outwardly directed flange was provided intermediate the ends of the cylinder so as to occupy the space between corresponding securing bolts of the two end flanges and prevent metal items from bridging the two. Although effective, this pipe coupling was difficult to make with adequate strength because of the amount of material which had to be removed in its manufacture.

GB 977133 discloses a pipe coupling comprising an insulating body, but without through-holes for the bolts, since the bolts are moulded into the material of the body; this construction makes it impossible to check the bolt heads.

According to the present invention there is provided a pipe coupling comprising a body of "electrically insulating material" (as hereinbefore defined) having a through bore, and at respective ends, annular end faces for mating with the flanged ends of two conduits which are to be coupled, through-holes extending between the annular end faces to receive bolts, characterised in that each end of the body is provided with a circumferential array of castellated formations formed by cut-aways at the junction between the respective end face and periphery of the body, each cut-away being open laterally of the body and having an end wall offset axially inwardly from the adjacent end face, with the castellated formations at opposite ends angularly offset so that each castellated formation at one end is aligned with a respective one of the cut-aways of the other end, with the through-holes extending between the end walls of respective cut-aways and the corresponding formation at the opposite end of the body.

It will be appreciated that since the cut-aways accommodate the heads of respective securing bolts (or the associated nuts, depending on which way round the bolts are inserted) bridging between circumferentially adjacent bolts, which are secured to respective ones of the pipe flanges, is easy to achieve without the need for a great deal of machining of a nature likely to reduce the strength of the pipe coupling.

Preferably there is an un-cut-away axial central portion of the body so that the end walls of the cut-aways at the two ends are offset axially of the body relative to one another. This should assist in maintaining the strength of the pipe coupling and additionally make it even more difficult for conductive bridges to occur between the bolts secured to the respective pipework flanges.

In view of the application mentioned earlier, the body of the pipe coupling is made from an electrically insulating, or substantially electrically insulating (i.e. greater than a few ohms end to end resistance) material and any additional parts which may constitute the pipe coupling are made of such a material and are so arranged so that there is no possibility of their causing a short circuit between the flanges to which the coupling is connected.

The invention will be further described by way of non-limiting example with reference to the accompanying drawings in which:—

Figure 1 is a cross-sectional view of one embodiment of the present invention;

Figure 2 is a perspective view of the pipe coupling of Figure 1;

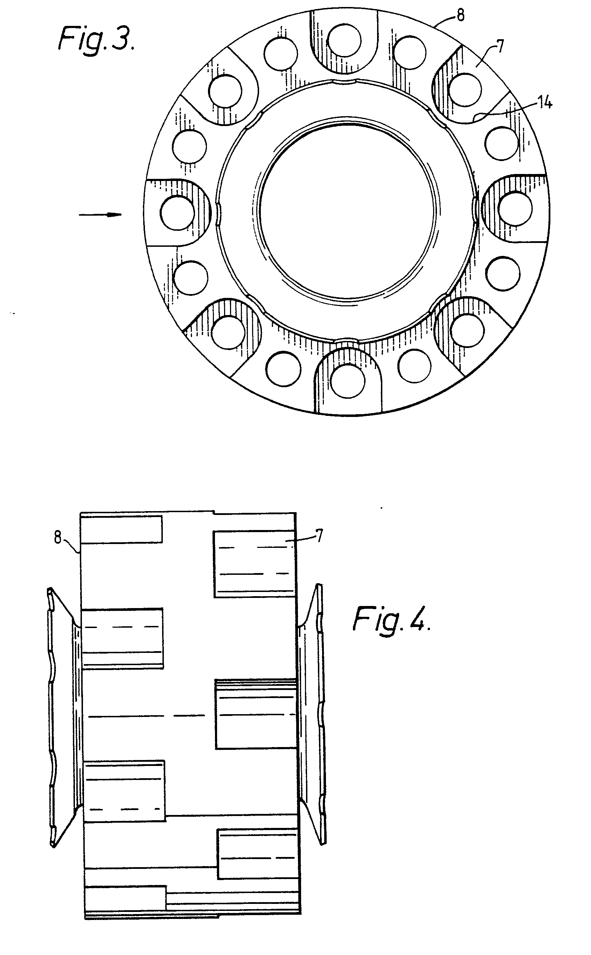

Figure 3 is an end elevation of the pipe coupling of Figure 1;

Figure 4 is a side elevation of the pipe coupling of Figure 1; and

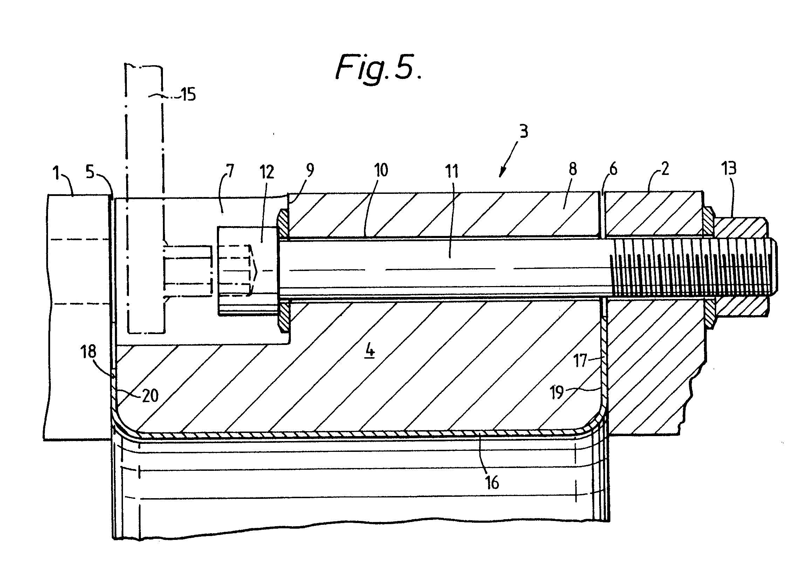

Figure 5 is a partial cross-sectional view of the pipe coupling of Figures 1 to 4 installed between two pieces of pipework.

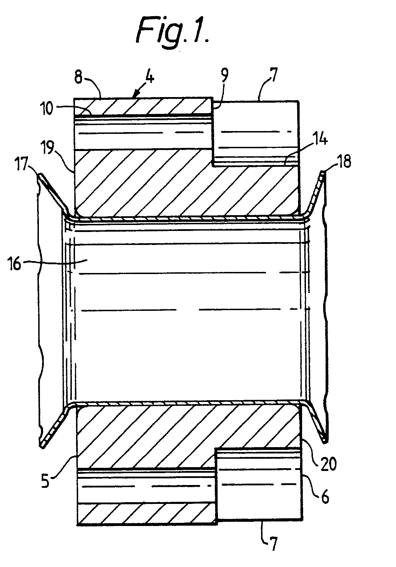

Figure 1 shows the annular flanges 1 and 2 at the opposed ends of pieces of ship to shore pipework which are to be interconnected by a pipe coupling 3 according to the present invention. The pipe coupling 3 is in the form of an annular body with a coaxial, cylindrical through-bore made of a strong, easily machinable insulating plastics material such as polypenco nylatron GSM with two end faces 5 and 6 which are perpendicular to its longitudinal axis. At each end of the body 4 there is a circumferential array of cut-aways such as 7 into the peripheral surface and end surface of the body 4. The cut-aways 7 are all similar to one another and are equally angularly spaced around the axis of the body 4 with the cut-aways 7 at one of the body 4 being aligned with castellated formations 8 formed by the part of the body 4 between adjacent cut-aways at the opposite end. It will be appreciated, therefore, that the angular displacement between the two sets of cutaways is half the angular displacement between adjacent cut-aways in each set and that, apart from this offset the coupling 3 is symmetrical about a median plane perpendicular to the axis of the through-hole of the coupling.

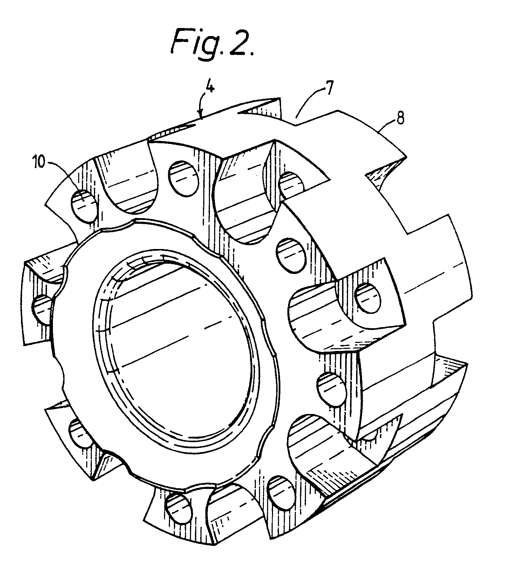

A respective through-hole 10 extends between the inner end wall 9 of each cut-away, which end wall 9 is also perpendicular to the axis of body 4 and the opposite end of the body; the end walls 9 of the cut-aways 7 at each end of the body 4 lie in respective common planes. Each through-hole 10 accommodates the shank 11 of a bolt, the head 12 of which is accommodated in the associated cut-away 7. The threaded part of the bolt 12 extends through the mating flange, such as 2, and is secured by means of a nut 13. It will be seen from Figure 2 that each cut-away 7 has a radially inner wall portion 14 which conforms to a part cylinder whose axis coincides with that of the corresponding through-hole 10. Apart from being relatively easy to mill, this part cylindrical surface portion accommodates the rotation of a key 15 which may, if necessary, be a specially fabricated allen key, and is used to tighten the bolts 12. It will be appreciated that the fact that each castellated formation 8 extends radially outwardly beyond the heads of the bolts 12 in the circumferentially adjacent cut-aways 7 provides a measure of protection for these heads. Also, the fact that the inner end walls 9 at opposite ends of the body 4 are spaced to opposite sides of the longitudinal medium plane of the body 4 means that it is difficult for short circuiting bridges to occur between bolts respectively connected to the two opposed flanges 1 and 2. The coupling may be provided with a PTFE liner 16 having a cylindrical middle section accommodated in the through-bore of the body 4 and two annular end flanges 17 and 18 which preferably extend across the annular sealing faces 19 and 20 constituted by the portions of the end faces radially inwardly of the radially innermost parts of the cut-away 7. The liner 16 is intended to protect the main body of the coupling against incompatible products. The flanges 17 and 18 are shaped so as to be inclined outwardly when in an unclamped condition.

## Claims

1. A pipe coupling comprising a body (4) of "electrically insulating material" (as hereinbefore defined) having a through bore, and at respective ends, annular end faces for mating with the flanged ends of two conduits which are to be coupled, and through-holes (10) extending between the annular end faces (5, 6,) to receive bolts (11), characterised in that each end of the body is provided with a circumferential array of castellated formations (8) formed by cut-aways (7) at the junction between the respective end face (5, 6) and periphery of the body, each cut-away (7) being open laterally of the body (4) and having an end wall (9) offset axially inwardly from the adjacent end face (5, 6), with the castellated formations (8) at opposite ends angularly offset so that each castellated formation (8) at one end is aligned with a respective one of the cut-aways (7) of the other end, with the through-holes extending between the end walls (9) of respective cut-aways (7) and the corresponding formation (8) at the opposite end of the body (4).

2. A pipe coupling according to claim 1 wherein the end walls (9) of the cut-aways (7) at the two ends are offset axially of the body relative to one another.

3. A coupling according to claim 1 wherein the end walls of the cut-aways (7) at each end lie in a respective, common, plane.

4. A coupling according to any one of the preceding claims wherein each cut-away (7) has a wall portion (14) extending between the adjacent end face (5, 6) of the body and its own end wall, said wall portion (14) being parallel to the outer peripheral wall of the body and being of an opposite curvature relative to the surrounding part of the periphery of the body.

5. A pipe coupling according to claim 4 wherein each said wall portion (14) is part-cylindrical with an axis substantially coinciding with the axis of the associated through-hole (10).

6. A pipe coupling according to any one of the preceding claims wherein, with the exception of the angular offset of the formations at each end, the pipe coupling is symmetrical about a median plane perpendicular to the axis of its through-bore.

7. A pipe coupling according to any one of the preceding claims and further comprising a liner insert (16) having at each end of the body an annular flange (17) extending outwardly from the through-bore in the body (14) across the associated annular end face of the body (4) to improve sealing between the body and a flange to which it is to be connected.

## Patentansprüche

1. Rohrverbindung mit einem Körper (4) aus "elektrisch isolierendem Material" (— wie zuvor definiert), der eine Durchgangsbohrung, an jeweiligen Enden ringförmige Endflächen zum Zusammenfügen mit den flanschförmigen Enden von zwei miteinander zu verbindenden Leitungen und Durchgangslöcher (10) aufweist, die sich zur Aufnahme von Bolzen (11) zwischen den ringförmigen Endflächen (5, 6) erstrecken, dadurch gekennzeichnet, daß jedes Ende des Körpers (4) mit einer sich um den Umfang erstreckenden Reihe von zinnenförmigen Ausbildungen (8) versehen ist, die durch Ausschnitte (7) an der Verbindungsstelle zwischen der jeweiligen Endfläche (5, 6) und dem Umfang des Körpers (4) gebildet sind, wobei jeder Ausschnitt (7) seitlich des Körpers (4) offen ist und eine Endwand (9) aufweist, die gegen die benachbarte Endfläche (5, 6) axial nach innen versetzt ist, wobei die zinnenförmigen Ausbildungen (8) an entgegengesetzten Enden in ihrem Winkel versetzt sind, so daß jede zinnenförmige Ausbildung (8) an einem Ende mit einem jeweiligen Ausschnitt (7) des anderen Endes fluchtet, und wobei sich die Durchgangslöcher (10) zwischen den Endwänden (9) der jeweiligen Ausschnitte (7) und der entsprechenden Ausbildung (8) an dem entgegengesetzten Ende des Körpers (4) erstrecken.

2. Rohrverbindung nach Anspruch 1, dadurch gekennzeichnet, daß die Endwände (9) der Ausschnitte (7) an den beiden Enden relativ zueinander in axialer Richtung des Körpers (4) versetzt sind.

3. Rohrverbindung nach Anspruch 1, dadurch gekennzeichnet, daß die Endwände (9) der Ausschnitte (7) an jedem Ende jeweils in einer gemeinsamen Ebene liegen.

4. Rohrverbindung nach einem der vorhergehenden Ansprüche, dadurch gekennzeichnet, daß jeder Ausschnitt (7) einen Wandabschnitt (14) aufweist, der sich zwischen benachbarten Endflächen (5, 6) des Körpers (4) und seiner eigenen Endwand erstreckt, wobei der Wandabschnitt (14) zur äußeren Umfangswand des Körpers (4) parallel ist und in Bezug zu dem umgebenden Teil des Umfangs des Körpers (4) eine entgegengesetzte Krümmung aufweist.

5. Rohrverbindung nach Anspruch 4, dadurch gekennzeichnet, daß jeder Wandabschnitt (14) teilzylindrisch mit einer Achse ausgebildet ist, die im wesentlichen mit der Achse des zugehörigen Durchgangsloches (10) zusammenfällt.

6. Rohrverbindung nach einem der vorhergehenden Ansprüche, dadurch gekennzeichnet, daß sie mit Ausnahme des Winkelversatzes der Ausbildungen (8) an jedem Ende um eine zur Achse ihrer Durchgangsbohrung senkrechte Mittelebene symmetrisch ist.

7. Rohrverbindung nach einem der vorhergehenden Ansprüche, dadurch gekennzeichnet, daß eine Futtereinlage (16) vorgesehen ist, die an jedem Ende des Körpers (4) einen ringförmigen Flansch (17) aufweist, der sich von der Durchgangsbohrung im Körper (4) über die zugehörige ringförmige Endfläche des Körpers (4) erstreckt zur Verbesserung der Dichtung zwischen dem Körper (4) und einem Flansch, mit dem er verbunden wird.

## Revendications

1. Raccord de tube comprenant un corps (4) en "matériau électriquement isolant" (tel qu'il est défini ci-dessus) présentant un alésage qui le traverse et aux extrémités respectives des faces d'extrémité annulaires destinées à s'assembler avec les extrémités à bride des deux conduits qui doivent être raccordés ainsi que des trous traversants (10) s'étendant entre les faces d'extrémité annulaires (5, 6) afin de recevoir des boulons (11) caractérisé en ce que chaque extrémité du corps présente un réseau circonférentiel d'éléments (8) crénelés formés par des découpes (7) à la jonction entre la face d'extrémité respective (5, 6) et la périphérie du corps, chaque découpe (7) étant ouverte latéralement par rapport au corps (4) et ayant une paroi d'extrémité (9) décalée dans la direction axiale vers l'intérieur à partir de la face d'extrémité adjacente (5, 6), les éléments crénelés (8) des extrémités opposées étant angulairement décalés de façon que chaque élément crénelé (8) d'une extrémité soit aligné avec une des découpes correspondantes (7) de l'autre extrémité, les trous traversants s'étendant entre les parois d'extrémité (9) des découpes respectives (7) et l'élément correspondant (8) de l'extrémité opposée du corps (4).

2. Raccord de tube selon la revendication 1, caractérisé en ce que les parois d'extrémité (9) des découpes (7) des deux extrémités sont décalées dans la direction axiale du corps les unes par raport aux autres.

3. Raccord selon la revendication 1, caractérisé en ce que les parois d'extrémité des découpes (7) à chaque extrémité sont situées dans un plan commun correspondant.

4. Raccord selon l'une quelconque des revendications précédentes, caractérisé en ce que chaque découpe (7) comprend une portion de paroi (14) s'étendant entre la face d'extrémité adjacente (5, 6) du corps et sa propre paroi d'extrémité, ladite portion de paroi (14) étant parallèle à la paroi périphérique extérieure du corps et ayant une courbure opposée par rapport à la partie voisine de la périphérie du corps.

5. Raccord de tube selon la revendication 4, caractérisé en ce que chacune des dites portions de paroi (14) est une portion de cylindre dont l'axe coïncide sensiblement avec l'axe du trou traversant associé (10).

6. Raccord de tube selon l'une quelconque des revendications précédentes, caractérisé en ce que, à l'exception du décalage angulaire des éléments à chaque extrémité, le raccord de tube est symétrique par rapport à un plan médian perpendiculaire à l'axe de son alésage traversant.

7. Racord du tube selon l'une quelconque des revendications précédentes caractérisé en ce qu'il

7 · 0 113 948 · 8

comprend en outre une garniture insérée (16) ayant à chaque extrémité du corps une bride annulaire (17) s'étendant vers l'extérieur à partir de l'alésage traversant du corps (14) au travers de la face d'extrémité annulaire associée du corps (4) pour améliorer l'étanchéité entre le corps et une bride à laquelle il doit être relié.

# Fig.1.

# Fig. 2.

Fig.3.

Fig.4.

Fig.5.

0 113 948